(19) Europäisches Patentamt European Patent Office Office européen des brevets

(11) **EP 4 365 625 A1**

(12) **EUROPEAN PATENT APPLICATION**

(43) Date of publication:
**08.05.2024 Bulletin 2024/19**

(21) Application number: **23207741.2**

(22) Date of filing: **03.11.2023**

(51) International Patent Classification (IPC):
**G01S 7/481** (2006.01)    **G01S 7/4863** (2020.01)
**G01S 17/89** (2020.01)

(52) Cooperative Patent Classification (CPC):
**G01S 7/4815; G01S 7/4863; G01S 17/89**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 CN 202211396263**

(71) Applicant: **Suteng Innovation Technology Co., Ltd Shenzhen City Guangdong 518000 (CN)**

(72) Inventors:
• **GONG, Changsheng**
  **Shenzhen City (CN)**
• **CAO, Rentian**
  **Shenzhen City (CN)**
• **WANG, Jiaxin**
  **Shenzhen City (CN)**

(74) Representative: **Ran, Handong et al**
  **Maucher Jenkins**
  **Seventh Floor Offices**
  **Artillery House**
  **11-19 Artillery Row**
  **London SW1P 1RT (GB)**

(54) **LIDAR CONTROLLING METHOD AND APPARATUS AND ELECTRONIC DEVICE**

(57)    This application discloses a LiDAR controlling method, the LiDAR includes a laser emission array and a laser receiving array, and the method includes: in a measurement cycle, determining at least one emission block to be turned on in the measurement cycle from the laser emission array, where the emission array includes multiple emission blocks; each emission block includes multiple emission units; controlling at least one emission block to emit a laser beam according to a preset rule; and controlling a receiving block in the laser receiving array that corresponds to the at least one emission block to receive a laser echo, where the laser echo refers to an echo formed after the laser beam is reflected by a target object. Not only a frame rate can be ensured, but also optical crosstalk is reduced, thereby improving flexibility of measurement and accuracy of a measurement result. The correspondence between the emission block and the receiving block depends on detection distance requirements in different regions of the LiDAR. For example, a first emission group in a first row corresponds to a relatively short detection distance and large shift of the large light spot, and therefore, the first receiving group corresponding to the first emission group is the entire row. A second receiving group corresponding to the second emission group in the middle row F is some receiving blocks in the row F.

(a)    (b)

FIG. 12

EP 4 365 625 A1

**Description**

## TECHNICAL FIELD

This application relates to the technical field of laser detection, and in particular, to a LiDAR controlling method and apparatus and an electronic device.

## BACKGROUND

LiDAR can directly fast images three-dimensional space with high precision, and therefore, has become one of mainstream sensors in existing autonomous driving technologies. Currently, LiDAR mainly develops towards stronger ranging and higher point cloud density. How to improve the ranging performance and density of detection point cloud has become a problem that needs to be urgently resolved.

## SUMMARY

Embodiments of this application provide a LiDAR controlling method and apparatus and an electronic device. By controlling a canning method of the LiDAR, not only a frame rate can be ensured, but also optical crosstalk is reduced, thereby improving flexibility of measurement and accuracy of a measurement result.

The number of emission units of the LiDAR that emit laser beams in parallel is increased, thereby improving detection efficiency of the LiDAR.

The technical solution is as follows.

According to the first aspect, a LiDAR controlling method is provided, where the LiDAR includes a laser emission array and a laser receiving array. The method includes: in a measurement cycle, determining at least one emission block to be turned on in the measurement cycle from the laser emission array, where the laser emission array includes multiple emission blocks and each emission block includes multiple emission units; controlling the emission block to emit a laser beam; and controlling a receiving block in the laser receiving array that corresponds to the emission block to receive a laser echo, where the laser echo refers to an echo formed after the laser beam is reflected by a target object, and the receiving block includes multiple receiving units.

In an example in this application, when the at least one emission block to be turned on in the measurement cycle includes at least two emission blocks, the at least two emission blocks satisfying a condition of no optical crosstalk in physical positions, the method further includes: controlling the at least two emission blocks to emit laser beams at different times according to the preset rule.

In another example in this application, controlling the at least one emission block to emit a laser beam includes: controlling multiple emission units in the at least one emission block to emit laser beams simultaneously.

In another example in this application, before controlling the at least one emission block to emit a laser beam, the method further includes: obtaining the number of times for turning on the at least one emission block in the measurement cycle, where controlling at least one emission block to emit a laser beam includes: controlling the at least one emission block to emit the laser beam according to a preset rule and the obtained number of times.

In another example in this application, controlling the at least one emission block to emit the laser beam according to the preset rule and the obtained number of times includes: obtaining a time coding sequence corresponding to the at least one emission block, and emitting the laser beam according to the time coding sequence corresponding to the at least one emission block and the obtained number of times.

In another example in this application, controlling at least two emission blocks to emit laser beams at different times according to the preset rule includes: according to a time coding sequence corresponding to an emission block in a $k^{th}$ emission in the at least two emission blocks, controlling the emission block in the kth emission to emit a laser beam at corresponding time, where k is an integer greater than or equal to 1; and after a first preset duration threshold, according to a time coding sequence corresponding to an emission unit in a $(k+1)^{th}$ emission, controlling the emission block in the $(k+1)^{th}$ emission to emit a laser beam at corresponding time.

In another example in this application, a time coding sequence corresponding to any one of the at least two emission blocks is determined in a manner including: based on a first preset sequence, generating, by a linear feedback shift register, a series of pseudorandom sequences to obtain multiple pseudorandom sequences; determining an autocorrelation function for each of the multiple pseudorandom sequences; according to the autocorrelation function, determining at least one pseudorandom sequence with an autocorrelation coefficient less than a first specified threshold from the multiple pseudorandom sequences; and selecting one pseudorandom sequence from the determined at least one pseudorandom out as a time coding sequence corresponding to any emission block.

In another example in this application, each emission block includes multiple emission units simultaneously emitting detection laser beams.

In another example in this application, the number of emission units corresponding to each emission block is less than or equal to the number of receiving units corresponding to each receiving block.

In another example in this application, before controlling a receiving block in the laser receiving array that corresponds to the emission block to receive a laser echo, the method further includes: obtaining a receiving unit group corresponding to each emission block, where the receiving unit group includes N receiving unit blocks and N is a positive integer greater than 1, where after controlling a receiving block in the laser receiving array that corresponds to the emission block to receive an echo laser beam, the method further includes: fusing echo data received by the receiving unit group to obtain a fusion result; and determining a distance between the LiDAR and a target object based on the fusion result.

In another example in this application, a physical position relationship between the at least two emission blocks is determined based on a power, an angle of view, and a detection distance of each of the at least two emission blocks.

According to the second aspect, a LiDAR controlling apparatus is provided, where the LiDAR includes a laser emission array and a laser receiving array, and the apparatus includes: a determining module, configured to: in a measurement cycle, determine at least one emission block to be turned on in the measurement cycle from the laser emission array, where the laser emission array includes multiple emission blocks and each emission block includes multiple emission units; a first control module, configured to control the at least one emission block to emit a laser beam; and a second control module, configured to control a receiving block in the laser receiving array that corresponds to the at least one emission block to receive a laser echo, where the laser echo refers to an echo formed after the laser beam is reflected by a target object, and the receiving block includes multiple receiving units.

According to the third aspect, an electronic device is provided, including a memory, a processor and a computer program stored in the memory and executable on the processor which, when executed by the processor executes, causes the processor to implement the method in any implementation of the first aspect.

According to the fourth aspect, a computer-readable storage medium is provided, where the computer-readable storage medium stores an instruction, and when the instruction is executed by a processor, the method in any embodiment of the first aspect is implemented.

According to the fifth aspect, a computer program product including an instruction is provided, and when running on the computer, the instruction enables the computer to perform the method in any embodiment of the first aspect.

The technical solution provided in embodiments of this application implements the following beneficial effects:

In the measurement cycle, the at least one emission block to be turned on in the measurement cycle is determined from the laser emission array, where the emission array includes the multiple emission blocks, and each emission block includes the multiple emission units. Each emission block includes the multiple emission units. The emission block is controlled to emit the laser beam. The receiving block in the laser receiving array that corresponds to the emission block is controlled to receive the laser echo, where the laser echo refers to the echo formed after the laser beam is reflected by the target object; and the receiving block includes the multiple receiving units. Therefore, the multiple emission units in the at least one emission block are controlled to emit the laser beams in the measurement cycle. In addition, the receiving block corresponding to the emission block is controlled to receive the laser echo. The distance between the emission units emitting the laser beams in parallel is reduced, to reduce an effect range of crosstalk during emission, and therefore, not only the frame rate is ensured, but also optical crosstalk is reduced, thereby ensuring flexibility of emission control. That is, the method provided in this application can resolve problems of optical crosstalk and frame rate of the array-type LiDAR, so that the measurement result can be accurately determined.

## BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may derive other drawings from these accompanying drawings without creative efforts.

FIG. 1 is a schematic diagram of a laser emission array and a laser receiving array according to an exemplary embodiment;
FIG. 2 is a flowchart of a LiDAR controlling method according to an exemplary embodiment;
FIG. 3 is a diagram of a layout within three emission blocks according to an exemplary embodiment;
FIG. 4 is a diagram of layouts within an emission block and a corresponding receiving block according to an exemplary embodiment;
FIG. 5 is a flowchart of a LiDAR controlling method according to an exemplary embodiment;
FIG. 6 is a schematic diagram of a laser emission array and a laser receiving array according to another exemplary embodiment;
FIG. 7 is a schematic diagram of an emission pattern of a laser beam according to an exemplary embodiment;

FIG. 8 is a flowchart of a LiDAR controlling method according to another exemplary embodiment;

FIG. 9 is a schematic diagram of a laser emission array and a laser receiving array according to another exemplary embodiment;

FIG. 10 is a schematic diagram of a laser emission array and a laser receiving array according to another exemplary embodiment;

FIG. 11 is a schematic diagram of a laser emission array and a laser receiving array according to another exemplary embodiment;

FIG. 12 is a schematic diagram of a laser emission array and a laser receiving array according to another exemplary embodiment;

FIG. 13 is a schematic diagram of a laser emission array according to another exemplary embodiment;

FIG. 14 is a schematic structural diagram of a LiDAR controlling apparatus according to an exemplary embodiment; and

FIG. 15 is a schematic structural diagram of an electronic device according to an exemplary embodiment.

## DESCRIPTION OF THE INVENTION

To make objectives, technical solutions and advantages of the present application clearer, embodiments of the present application are described in further detail below with reference to the drawings.

It should be understood that "multiple" mentioned in this application means two or more than two. In description of this application, unless otherwise stated, "/" means "or", for example, A/B can mean A or B. "and/or" in this specification is only an association relationship for describing associated objects and indicates that three relationships may exist. For example, A and/or B may mean the following three cases: Only A exists, both A and B exist, and only B exists. In addition, to clearly describe the technical solution in this application, characters such as "first" and "second" are used to distinguish the same or similar items with basically the same functions and effects. Persons skilled in the art can understand that characters such as "first" and "second" do not limit the number or an execution sequence, and the characters such as "first" and "second" do not necessarily limit modified items to a difference case.

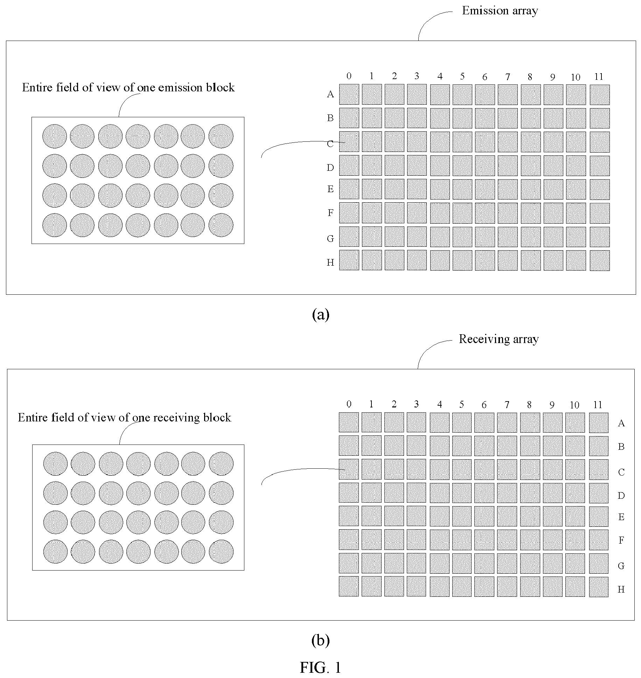

Firstly, an execution body involved in the embodiments of this application is introduced. The method provided in this embodiment of this application can be executed by an electronic device. The electronic device can be configured in array-type LiDAR or connected to the array-type LiDAR. That is, the LiDAR includes a laser emission array and a laser receiving array. Exemplarily, referring to FIG. 1, FIG. 1 is a schematic diagram of an array according to an exemplary embodiment. FIG. 1 (a) is a schematic diagram of a laser emission array, and in FIG. 1 (b) is a schematic diagram of a laser receiving array. As shown in in FIG. 1 (a), the laser emission array includes multiple emission blocks, and each emission block includes multiple emission units. This application does not limit the number of emission blocks included in the emission array or the number of emission units included in each emission block. As shown in FIG. 1 (b), the laser receiving array includes multiple receiving blocks, and each receiving block includes multiple receiving units. This application does not limit the number of receiving blocks included in the receiving array or the number of receiving units included in each receiving block.

In an instance, the electronic device may be a terminal device such as a mobile phone, a notebook computer or a tablet, or a processor, or may also be a vehicle-mounted device. This is not limited in this embodiment of this application.

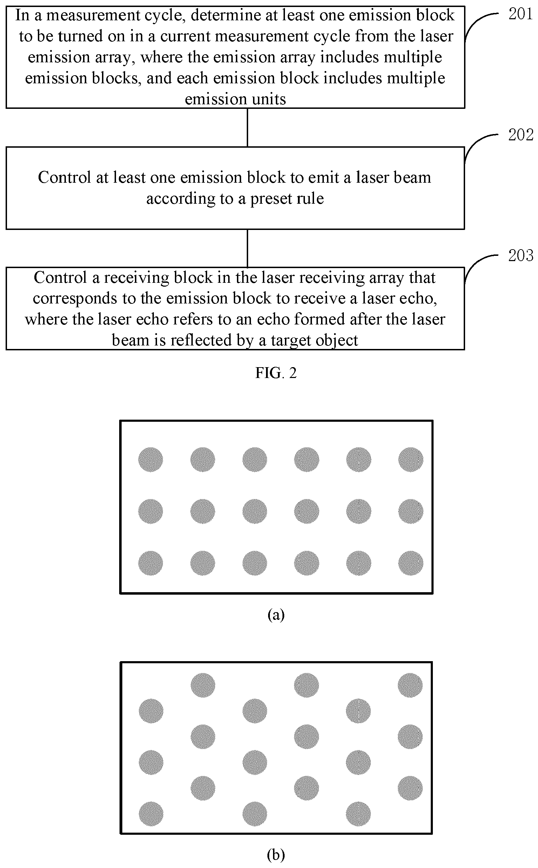

Based on the electronic device provided above, next, the method provided in this embodiment of this application is introduced in detail. Referring to FIG. 2, FIG. 2 is a flowchart of a LiDAR controlling method according to an exemplary embodiment. Exemplarily but non-restrictively, the method is applied to the foregoing electronic device. The method may include the following steps:

Step 201: In a measurement cycle, determine at least one emission block to be turned on in the measurement cycle from the laser emission array, where the emission array includes multiple emission blocks, and each emission block includes multiple emission units;

The measurement cycle can be set according to an actual need.

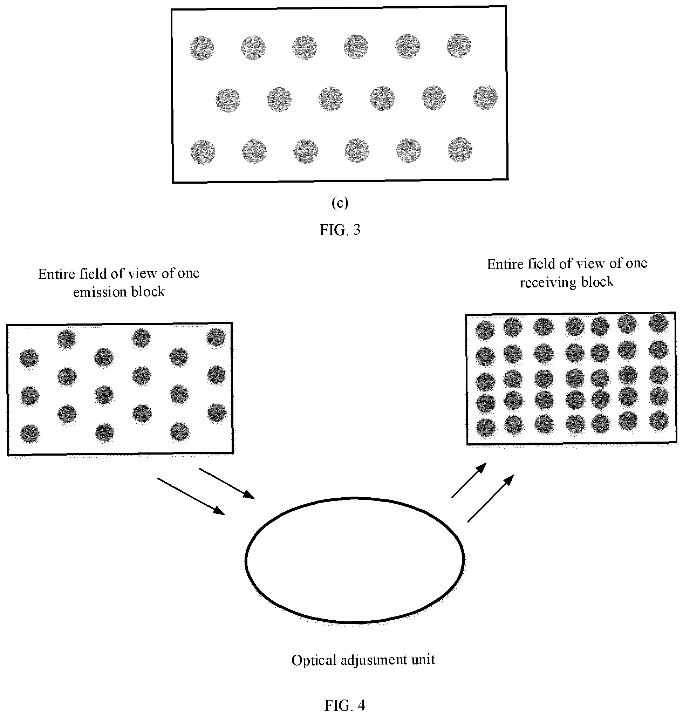

It can be understood that emission units included in each emission block can be arranged regularly or irregularly. This is not limited in this application. Specific arrangement forms are shown in FIG. 3a, FIG. 3b, and FIG. 3c. This application does not limit the specific arrangement forms of the emission units in each emission block. It can be understood that FIG. 3b shows a preferred arrangement form of emission units. Through this arrangement, a distance between any two light-emitting holes can be increased within a limited area, thereby improving a yield rate in a production process of VCSEL.

In this application, the electronic device controls a laser emission array of the LiDAR to cyclically emit laser beams. In an example in this application, it is necessary to determine which emission block or blocks are to be turned on, that is, the emission group to be turned on in the current measurement cycle is determined from the laser emission array. This embodiment of this application does not limit a sequence or a position of the emission block to be turned on in each measurement cycle.

In an example in this application, different emission blocks can be controlled to emit laser beams in different measurement cycles starting from a middle laser emission row or column. For example, referring to FIG. 1, different emission blocks in the fourth row or column can be first controlled to emit laser beams in different measurement cycles. After the emission blocks in the fourth row or column complete emission, different emission blocks in the fifth row or column are further controlled to emit laser beams in different cycles, and then different emission blocks in the third row or column are controlled to emit laser beams in the different cycles. By analogy, the LiDAR gradually scans from a middle region to regions on both sides until an emission group in the last row or column completes emission. Then, different emission blocks in the fourth row or column can be continuously recontrolled to emit laser beams in different measurement cycles, and so on.

In an example in this application, different emission blocks can be controlled to emit laser beams in different measurement cycles starting from the first laser emission row or column. For example, referring to FIG. 1, different emission groups in the first row or column can be first controlled to emit laser beams in different measurement cycles. After the emission blocks in the first row or column complete emission, different emission groups in the second row or column are further controlled to emit laser beams in different measurement cycles, and so on, until emission groups in the last row or column complete emission. Then, different emission groups in the first row or column can be continuously recontrolled to emit laser beams in different measurement cycles, and so on.

Step 202: Control at least one emission block to emit a laser beam according to a preset rule.

It can be understood that controlling at least one emission block to emit a laser beam according to a preset rule may be controlling the multiple emission units in the at least one emission block to emit detection laser beams simultaneously.

It can be understood that all the emission units in the emission block can be controlled to illuminate and emit the laser beams simultaneously. Alternatively, the emission units in the emission block can also partially illuminate at different times until all the emission units in the emission block illuminate to emit laser beams. Optionally, some of the emission units may alternatively illuminate each time to emit the laser beams. This application does not limit the number or the form of the illuminating emission units in each emission block, or the number of times of illumination in each measurement cycle.

Step 203: Control a receiving block in the laser receiving array that corresponds to the emission block to receive a laser echo, where the laser echo refers to an echo formed after the laser beam is reflected by a target object.

It can be understood that the emission block corresponds to N receiving blocks in the receiving array, and N is a positive integer greater than or equal to 1. It can be understood that when N is 1, a correspondence between each emission block in the emission array and the receiving block in the receiving array is a one-to-one relationship; or when N is a positive integer greater than 1, a correspondence between each emission block in the emission array and the receiving blocks in the receiving array is a one-to-many relationship.

It can be understood that controlling a receiving block in the laser receiving array that corresponds to the emission block to receive a laser echo includes: obtaining N receiving blocks corresponding to each emission block; and controlling the N receiving blocks to receive the laser echo.

It can be understood that when a distance from the LiDAR to the target object changes, there is an offset in mapping positions of the emission block and the receiving block, and therefore, in this embodiment of this application, when the emission block is controlled to emit a signal, the target receiving unit block is first determined based on the offset of the mapping positions. When there are multiple target receiving unit blocks, mapping offset at all distances can be better covered to ensure that echo data can be received.

In an optional manner, each emission block can also correspond to the entire planar receiving array.

The number of receiving blocks corresponding to each emission block depends on a detection distance requirement set for the LiDAR, an emission angle of view of each emission block, a receiving angle of view of the receiving block, and a physical distance between the emission array and the receiving array.

In an optional manner, each receiving block may include M receiving units, where M is a positive integer greater than or equal to 1.

It can be understood that the receiving angle of view corresponding to each receiving block is greater than or equal to the emission angle of view corresponding to each emission block.

It can be understood that, in an optional embodiment, when the emission angle of view corresponding to the emission block is less than the receiving angle of view corresponding to the receiving block, an optical adjustment unit can be disposed in front of the emission block to adjust the angle of view of the emission block through the optical adjustment unit, so that the emission angle of view of the emission block is most likely to be equal to the receiving angle of view of the receiving block, thereby better utilizing the receiving angle of view of the receiving block. In an optional embodiment, as shown in FIG. 4, the number of emission units included in the emission block may be set to be less than the number of receiving units in the receiving block, and the overall outgoing light spot of the emission unit is adjusted through the optical adjustment unit, thereby ensuring receiving efficiency of the receiving block and a frame rate to the maximum extent while reducing complexity of the emission block and costs of the emission device.

In an optional manner, after controlling a receiving block in the laser receiving array that corresponds to the emission block to receive an echo laser beam, the method further includes: fusing echo data received by the N receiving blocks to obtain a fusion result; and determining detection information of the target object based on the fusion result. It can be understood that the detection information includes a distance, a size, a speed, reflectivity and other information of the target object.

In an optional manner, before controlling at least one emission block to emit a laser beam according to the preset rule, the method further includes: obtaining the number of times for turning on the at least one emission block in the measurement cycle, where controlling at least one emission block to emit a laser beam according to the preset rule includes: controlling the at least one emission block to emit the laser beam according to the obtained number of times.

In an optional manner, before controlling at least one emission block to emit a laser beam according to a preset rule, the method further includes: obtaining emission power of the at least one emission block in the measurement cycle, and controlling the at least one emission block to emit a laser beam according to the emission power.

In an optional manner, before controlling at least one emission block to emit a laser beam according to a preset rule, the method further includes: obtaining a time coding sequence of the at least one emission block, where controlling at least one emission block to emit a laser beam according to a preset rule includes: controlling the at least one emission block to emit the laser beam according to the time coding sequence.

It can be understood that controlling at least one emission block to emit a laser beam according to a preset rule further includes: obtaining a time coding sequence corresponding to the at least one emission block, and emitting the laser beam according to the time coding sequence corresponding to the at least one emission block and the number of turn-on times.

It can be understood that the preset rule can also be a combination of the foregoing optional methods, and this is not limited in this application.

It can be understood that the time coding sequence corresponding to each emission block in the laser emission array may be predetermined. In an example in this application, a manner for determining a time coding sequence corresponding to any one emission block in an emission group includes: based on the first preset sequence, generating, by a linear feedback shift register, a series of pseudorandom sequences to obtain multiple pseudorandom sequences. An autocorrelation function is determined for each of the multiple pseudorandom sequences; and according to the autocorrelation function, at least one pseudorandom sequence with an autocorrelation coefficient less than a first specified threshold is determined from the multiple pseudorandom sequences. One pseudorandom sequence is selected from the determined at least one pseudorandom sequence as a time coding sequence corresponding to any emission block.

The first preset sequence can be set according to an actual need. It can be understood that the first preset sequence is a sequence seed used to generate a series of pseudorandom sequences. In an example, different emission units correspond to different first preset sequences.

The first specified threshold can be set according to an actual need.

During implementation, the first preset sequence may be input into the linear feedback shift register, and the linear feedback shift register outputs the series of pseudorandom sequences to obtain multiple pseudorandom sequences. For any one of the multiple pseudorandom sequences, if correlation between the pseudorandom sequence and itself is large, when the pseudorandom sequence is subsequently selected as the time coding sequence of the emission unit, a laser beam emitted by the emission block is likely to interfere with a laser beam emitted by the emission block at the next moment. Therefore, the autocorrelation function of each of the multiple pseudorandom sequences can be determined to determine a pseudorandom sequence with less interference to itself based on the autocorrelation function. During implementation, the autocorrelation function of each pseudorandom sequence can be determined through the following formula (1):

$$ACF(a, \tau) = \sum_{i=1}^{p} a_i a_{i+\tau} \quad (1)$$

Herein, **$ACF(a, \tau)$** is the autocorrelation function, $a_i$ represents an $i^{th}$ pseudorandom sequence, and $\tau$ is preset time offset.

Then a pseudorandom sequence with an autocorrelation function whose other parts than a main lobe are as small as possible (for example, a part less than an energy threshold) is selected. The pseudorandom sequence selected at this time is a pseudorandom sequence with an autocorrelation coefficient less than the first specified threshold. In an example, the electronic device randomly selects one pseudorandom sequence from the determined at least one pseudorandom sequence as a time coding sequence corresponding to an emission unit in the emission group. For example, after the foregoing processing, a time coding sequence of a specific emission unit is determined as {0.1, 0.4, 0.2, 0.25, ...}. In this manner, the time coding sequence corresponding to each emission block in the laser emission array can be determined.

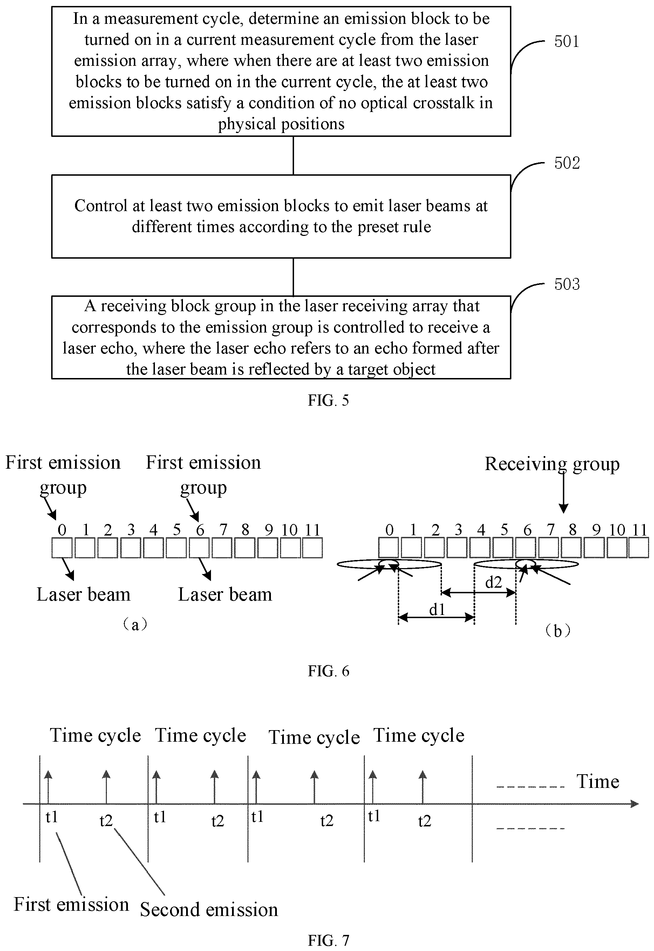

Based on the electronic device provided above, next, the method provided in this embodiment of this application is introduced in detail. Referring to FIG. 5, FIG. 5 is a flowchart of a LiDAR controlling method according to an exemplary embodiment. Exemplarily but non-restrictively, the method is applied to the foregoing electronic device. The method may include the following steps:

Step 501: In a measurement cycle, determine an emission block to be turned on in the measurement cycle from the laser emission array, where when there are at least two emission blocks to be turned on in the measurement cycle, the at least two emission blocks satisfy a condition of no optical crosstalk in physical positions.

The measurement cycle can be set according to an actual need.

No optical crosstalk means that there is almost no interference between multiple laser beams emitted by at least two emission blocks. It can be understood that the multiple laser beams emitted by the at least two emission blocks hardly overlap or do not overlap at all. That is, an overlapping rate is almost close to zero, or there is no overlapping of the laser beams.

In this application, the electronic device controls a laser emission array of the LiDAR to cyclically emit laser beams. In an example in this application, the emission of the emission block can be controlled by group during each measurement cycle, and therefore, it is necessary to determine which emission block or blocks are to be turned on, that is, the emission group to be turned on in the current measurement cycle is determined from the laser emission array. This embodiment of this application does not limit a sequence or a position of the emission group to be turned on.

In an example in this application, different emission groups can be controlled to emit laser beams in different measurement cycles starting from a middle laser emission row or column. For example, referring to FIG. 1, different emission groups in the fourth row or column can be first controlled to emit laser beams in different measurement cycles. After the emission blocks in the fourth row or column complete emission, different emission groups in the fifth row or column are further controlled to emit laser beams in different cycles, and then different emission groups in the third row or column are controlled to emit laser beams in the different cycles. By analogy, the LiDAR gradually scans from a middle region to regions on both sides until an emission group in the last row or column completes emission. Then, different emission groups in the fourth row or column can be continuously recontrolled to emit laser beams in different measurement cycles, and so on.

In an example in this application, different emission groups can be controlled to emit laser beams in different measurement cycles starting from the first laser emission row or column. For example, referring to FIG. 1, different emission groups in the first row or column can be first controlled to emit laser beams in different measurement cycles. After the emission blocks in the first row or column complete emission, different emission groups in the second row or column are further controlled to emit laser beams in different measurement cycles, and so on, until emission groups in the last row or column complete emission. Then, different emission groups in the first row or column can be continuously recontrolled to emit laser beams in different measurement cycles, and so on.

Therefore, the emission group to be turned on in each measurement cycle can be determined based on a control sequence of the foregoing rows. The number of emission blocks included in the emission group can be set according to a need.

In an example, the number of emission blocks included in the emission group is 2. For example, the two emission blocks include the first emission block and the second emission block. That is, two emission blocks to be turned on are determined within one measurement cycle. For example, referring to FIG. 1, within the first measurement cycle, a determined emission group includes emission block A0 and emission block A6. Within the second measurement cycle, a determined emission group includes emission block A1 and emission block A7. Within the third measurement cycle, a determined emission group includes emission block A2 and emission block A8. Within the fourth measurement cycle, a determined emission group includes emission block A3 and emission block A9. Within the fifth measurement cycle, a determined emission group includes emission block A4 and emission block A10. Within the sixth measurement cycle, the determined emission group includes emission block A5 and emission block A11. By analogy, details are shown in Table 1.

Table 1

| Example of two emissions within one measurement cycle | | |
|---|---|---|
| Measurement cycle | First emission block | Second emission block |
| 1 | A0 | A6 |
| 2 | A1 | A7 |
| 3 | A2 | A8 |
| 4 | A3 | A9 |

(continued)

| Example of two emissions within one measurement cycle | | |
|---|---|---|
| Measurement cycle | First emission block | Second emission block |
| 5 | A4 | A10 |
| 6 | A5 | A11 |
| ... | ... | ... |

It should be noted that the foregoing description is based on an example of one emission group including two emission blocks. In another embodiment, one emission group may also include three or more emission blocks. This is not limited in this embodiment of this application.

It should be noted that each emission block may include multiple emission units, specifically as described in the foregoing embodiments.

It should also be noted that a physical position relationship between the at least two emission blocks is determined based on a power, an angle of view, and a detection distance corresponding to each of the at least two emission blocks.

Because mutual crosstalk occurs between laser beams of adjacent or close emission blocks, if the number of parallel emissions needs to be increased, it is necessary to prevent optical crosstalk between multiple emission units emitting laser beams in parallel. Exemplarily, assuming that the number of emission blocks included in the emission group is two, for two emissions in the same emission group, to improve an optical crosstalk resistance capability, spatial positions of emission blocks included in each emission group can be separated according to a schematic diagram of emission in FIG. 6. A main principle is that echo floodlight of one laser beam does not fall at a position of another receiving block, that is, both d1 and d2 need to be greater than 0. Exemplarily but non-restrictively, width of main energy of the echo is equal to width of the receiving block. For example, there is no optical crosstalk between emission block A0 and emission block A6.

The number of receiving units corresponding to the emission block is related to the power, the angle of view, and the detection distance of the emission block. If intensity of a laser echo of the emission block is greater, the number of receiving blocks corresponding to the emission block is greater. If the emission angle of view of the emission block is smaller, the number of receiving blocks corresponding to the emission block is greater. If the detection distance corresponding to the emission block is shorter, the number of receiving blocks corresponding to the emission block is greater.

Step 502: Control at least two emission blocks to emit laser beams at different times according to the preset rule.

The preset rule can be set according to an actual need.

In an example in this application, specific implementation of step 502 may include: according to a time coding sequence corresponding to an emission unit in a kth emission in the at least two emission blocks, controlling the emission block in the kth emission to emit a laser beam at corresponding time, where k is an integer greater than or equal to 1. After a first preset duration threshold, according to a time coding sequence corresponding to an emission block in a $(k+1)^{th}$ emission, the emission block in the $(k+1)^{th}$ emission is controlled to emit a laser beam at corresponding time.

The first preset duration threshold can be set by the user according to an actual need, or can also be set by default by the electronic device. This is not limited in this embodiment of this application.

That is, for two emission blocks in the emission group that successively emit laser beams, there is an emission time interval of a first preset duration threshold between the two emission blocks. Exemplarily, assuming that the emission group includes three emission blocks, during implementation, the electronic device controls the first emission block to emit the laser beam at corresponding time according to the time coding sequence corresponding to the first emission block. After a first preset duration threshold, according to a time coding sequence corresponding to the second emission block, the electronic device controls the second emission block to emit a laser beam at corresponding time. Then after the first preset duration threshold, according to a time coding sequence corresponding to the third emission block, the electronic device controls the third emission block to emit a laser beam at corresponding time.

The time coding sequence corresponding to each emission block in the laser emission array may be predetermined. In an example in this application, a manner for determining a time coding sequence corresponding to any one emission block in an emission group includes: based on the first preset sequence, generating, by a linear feedback shift register, a series of pseudorandom sequences to obtain multiple pseudorandom sequences. An autocorrelation function is determined for each of the multiple pseudorandom sequences; and according to the autocorrelation function, at least one pseudorandom sequence with an autocorrelation coefficient less than a first specified threshold is determined from the multiple pseudorandom sequences. One pseudorandom sequence is selected from the determined at least one pseudorandom sequence as a time coding sequence corresponding to any emission block.

The first preset sequence can be set according to an actual need. It can be understood that the first preset sequence is a sequence seed used to generate a series of pseudorandom sequences. In an example, different emission units correspond to different first preset sequences.

The first specified threshold can be set according to an actual need.

During implementation, the first preset sequence may be input into the linear feedback shift register, and the linear feedback shift register outputs the series of pseudorandom sequences to obtain multiple pseudorandom sequences. For any one of the multiple pseudorandom sequences, if correlation between the pseudorandom sequence and itself is large, when the pseudorandom sequence is subsequently selected as the time coding sequence of the emission unit, a laser beam emitted by the emission block is likely to interfere with a laser beam emitted by the emission block at the next moment. Therefore, the autocorrelation function of each of the multiple pseudorandom sequences can be determined to determine a pseudorandom sequence with less interference to itself based on the autocorrelation function. During implementation, the autocorrelation function of each pseudorandom sequence can be determined through the following formula (1):

$$ACF(a, \tau) = \sum_{i=1}^{p} a_i a_{i+\tau} \quad (1)$$

Herein, $ACF(a, \tau)$ is the autocorrelation function, $a_i$ represents an $i^{th}$ pseudorandom sequence, and $\tau$ is preset time offset.

Then a pseudorandom sequence with an autocorrelation function whose other parts than a main lobe are as small as possible (for example, a part less than an energy threshold) is selected. The pseudorandom sequence selected at this time is a pseudorandom sequence with an autocorrelation coefficient less than the first specified threshold. In an example, the electronic device randomly selects one pseudorandom sequence from the determined at least one pseudorandom sequence as a time coding sequence corresponding to an emission unit in the emission group. For example, after the foregoing processing, a time coding sequence of a specific emission unit is determined as {0.1, 0.4, 0.2, 0.25, ...}. In this manner, the time coding sequence corresponding to each emission block in the laser emission array can be determined.

In an example, the number of values included in the time coding sequence is the same as the number of cyclic emissions. Exemplarily, if a specific emission block needs to cyclically emit laser beams 64 times, the number of values included in the time coding sequence is 64.

It should be noted that emission time of each emission block in different measurement cycles is coded through the pseudorandom sequence. Using different codes for different emission blocks can achieve low crosstalk with the great number of parallel emissions and reduce mutual interference.

After the time coding sequence corresponding to each emission block is determined, the time coding sequence can be stored locally. When it is necessary to control the emission block to emit a laser beam, the time coding sequence corresponding to each emission block can be used according to an actual need.

Exemplarily, referring to FIG. 7, during the first measurement cycle, the emission block A0 in the emission group is controlled at time t1 to emit the laser beam for the first time, and the emission unit A6 in the emission group is controlled at time t2 to emit the laser beam for the second time. It is assumed that a time coding sequence of the emission unit A0 is {0.2, 0.3, 0.4, 0.6 ...}, a time coding sequence of the emission unit A1 is {0.3, 0.4, 0.6, 0.7 ...}, and the first preset duration threshold is 3 seconds. It is assumed that a start moment of the current measurement cycle is at the $2^{nd}$ second, the emission unit A0 is controlled to emit a laser beam at the $2.2^{nd}$ second, and the emission unit A1 is controlled to emit a laser beam at the $5.3^{rd}$ second. Likewise, within the second measurement cycle, A1 in the emission group is controlled at time t1 in the second measurement cycle to emit a laser beam for the first time, A7 is controlled at time t2 to emit a laser beam for the second time, and so on.

Exemplarily but non-restrictively, within one measurement cycle, emission sequences of multiple emission blocks within one emission group can also be interchanged.

Step 503: Control a receiving block group in the laser receiving array that corresponds to the emission group to receive a laser echo, where the laser echo refers to an echo formed after the laser beam is reflected by a target object.

Referring to FIG. 1, assuming that the first laser emission row corresponds to the first laser receiving row, the second laser emission row corresponds to the second laser receiving row, and so on, the last laser emission row corresponds to the last laser receiving row, when any emission block in the first laser emission row is controlled to emit a laser beam, the laser receiving block in the first row receives a laser echo. Likewise, when any emission block in the second laser emission row is controlled to emit a laser beam, the second laser receiving row receives a laser echo. By analogy, when any emission unit in the last laser emission row is controlled to emit a laser beam, the last laser receiving row receives the laser echo.

Exemplarily, if the emission block A0 and the emission block A6 are controlled to emit laser beams at different times in the current measurement cycle, the first laser receiving row receives the laser echo. That is, for the laser beam emitted by the emission block A0, the first laser receiving row receives a laser echo, and for the laser beam emitted by the emission block A6, the first laser receiving row receives a laser echo.

The laser receiving array extracts all the laser echoes in the entire measurement cycle, a laser echo in time less than t2 is the laser echo of the first emission unit, and a laser echo in time greater than t2 is the laser echo of the second emission group. Further, when time code t1 corresponding to the first emission unit is zero, emission time of the first emission unit coincides exactly with a start moment of the current measurement cycle. When a value of t1 is greater than 0, a distance of t1 *c needs to be subtracted when a distance of the laser echo of the first emission unit is calculated, where c represents a speed of the laser beam. When a value of t1 is negative, a distance of t1*c needs to be added when a distance of the laser echo of the first emission unit is calculated. There is usually large delay t2 between the emission time of the second emission unit and the start moment of the measurement cycle, and t2 is the first preset duration threshold. A value of a time difference between t2 and t1 generally satisfies a condition that t2-t1 >= Lset *2/c, where Lset is the farthest detection distance of the LiDAR. Similarly, the distance of t2*c needs to be subtracted when the distance of the laser echo of the second emission unit is calculated.

It should be noted that an example in which one laser emission row corresponds to one laser receiving row is used for illustration above. In another embodiment, multiple laser emission rows may also correspond to one laser receiving row, or one laser emission row may also correspond to multiple laser receiving rows. This is not limited in this embodiment of this application.

In addition, it should be noted that in a measurement cycle, the laser receiving row continuously performs receiving operations. That is, from the start moment of the measurement cycle to the end moment of the measurement cycle, the electronic device controls the laser receiving row corresponding to the laser emission row to which the emission group belongs to continuously receive laser echoes.

In an optional embodiment, before controlling at least two emission blocks to emit laser beams at different times according to the preset rule, the method further includes: obtaining the number of times of turning on the at least two emission blocks in the current measurement cycle, where controlling at least one emission block to emit a laser beam according to a preset rule includes: controlling each of the two emission blocks to emit the laser beam according to the number of its corresponding turn-on times.

In an optional embodiment, before controlling at least two emission blocks to emit laser beams according to a preset rule, the method further includes: obtaining emission power of the two emission blocks in the current measurement cycle, and controlling at least one emission block to emit a laser beam according to the emission power of each of the at least two emission blocks.

It can be understood that the preset rule can also be a combination of the foregoing optional methods, and this is not limited in this application.

In this embodiment of this application, in a measurement cycle, an emission group to be turned on in a current measurement cycle is determined from the laser emission array, the emission group includes at least two emission blocks, and the at least two emission blocks satisfy a condition of no optical crosstalk in physical positions. At least two emission blocks are controlled to emit laser beams at different times according to the preset rule. A receiving unit group in the laser receiving array that corresponds to the emission group is controlled to receive a laser echo, where the laser echo refers to an echo formed after the laser beam is reflected by a target object. Therefore, in one measurement cycle, by controlling multiple emission blocks to emit laser beams at different times, not only a scanning frame rate is ensured, but also optical crosstalk caused by emitting laser beams simultaneously by the multiple emission blocks can be avoided, that is, the method provided in this application can resolve problems of optical crosstalk and frame rate of the array-type LiDAR, so that the measurement result can be accurately determined.

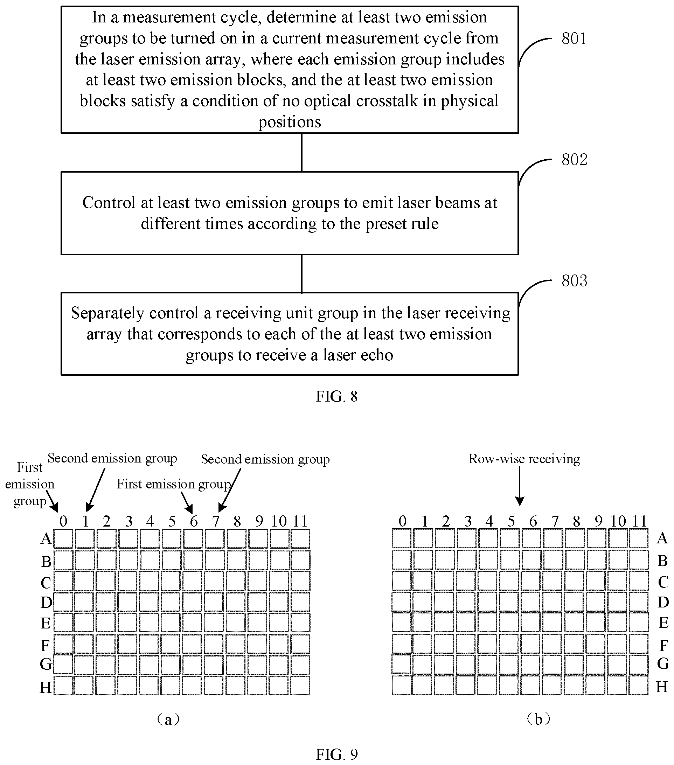

The foregoing embodiment is described by using an example in which there is one emission group in a measurement cycle. In another embodiment, at least two emission groups may also exist in the measurement cycle. In this case, referring to FIG. 8, FIG. 8 is a schematic flowchart of a LiDAR controlling method according to another exemplary embodiment. The method may include the following step:

Step 801: In a measurement cycle, determine at least two emission groups to be turned on in the measurement cycle from the laser emission array, where each emission group includes at least two emission blocks, and the at least two emission blocks satisfy a condition of no optical crosstalk in physical positions.

It can be understood that each emission group includes multiple emission units, as described in the foregoing embodiment. Details are described in this embodiment again.

In an example in this application, the electronic device may determine multiple emission groups to be turned on in each measurement cycle according to the preset rule. For example, multiple emission groups to be turned on in each measurement cycle can be determined based on control sequences of rows in the laser emission array.

In an example in this application, all emission units in a partition in the laser emission array (for example, a row of emission units are a partition) can be controlled in a measurement cycle to emit laser beams at different times, or some emission blocks in a partition in the laser emission array can be controlled in the measurement cycle to emit laser beams at different times. Duration of the measurement cycle and the number of emission groups included in the measurement cycle can be specifically set according to an actual need.

Exemplarily, the number of emission groups in each measurement cycle is 2. For example, the first emission group and the second emission group are included, the first emission group includes two emission blocks, and the second emission group includes two emission blocks. That is, two emission groups to be turned on are determined in one measurement cycle, and the number of emission blocks to be turned on in each emission group is 2.

For example, referring to FIG. 9, within the first measurement cycle, the first emission group includes emission block A0 and emission block A6, and the second emission group includes emission block A1 and emission unit A7. Within the second measurement cycle, the determined first emission group includes emission block A2 and emission block A8, and the second emission group includes emission block A3 and emission block A9. Within the third measurement cycle, the determined first emission group includes emission block A4 and emission block A10, and the second emission group includes emission block A5 and emission block A 11. By analogy, details are shown in Table 2.

Table 2

| Example of four emissions within one measurement cycle | | |
|---|---|---|
| Measurement cycle | First emission group | Second emission group |
| 1 | A0, A6 | A1, A7 |
| 2 | A2, A8 | A3, A9 |
| 3 | A4, A10 | A5, A11 |

It should be noted that the foregoing description is based on an example in which the number of emission groups in each measurement cycle is 2. That is, some emission blocks in a partition are determined as the emission blocks to be turned on in one measurement cycle. In another embodiment, the number of emission groups in each measurement cycle may also be another value. For example, there may also be 6 emission groups of (A0, A6), (A1, A7), (A2, A8), (A3, A9), (A4, A10), and (A5, A11) respectively in each measurement cycle. That is, all emission blocks in a partition in a measurement cycle can be determined as emission blocks to be turned on.

In addition, it should be noted that the foregoing description is based on an example of row-wise control. In another embodiment, control may also be implemented in another control manner. For example, control may be implemented at intervals of a row. Exemplarily, referring to FIG. 7, at least two emission groups satisfy the condition of no optical crosstalk at physical positions. At this time, in one measurement cycle, the first emission group includes emission block A0 and emission block A6, and the second emission group includes emission block F0 and emission block F6.

Step 802: Control at least two emission groups to emit laser beams at different times according to the preset rule.

In an example in this application, the emission blocks in the emission groups may be controlled by serial control to emit laser beams. During implementation, each of at least two emission groups is controlled sequentially to emit a laser beam in accordance with a preset emission sequence, where emission time of first emission blocks of each emission group in at least two emission groups in the same measurement cycle is spaced by an emission time interval of a second preset duration threshold.

The preset emission sequence can be set according to an actual need. For example, assuming that at least two emission groups include the first emission group, the second emission group, and the third emission group, the first emission group can be first controlled to emit laser beams, then the second emission group can be controlled to emit laser beams, and finally, the third emission group can be controlled to emit laser beams. In addition, there is a specific emission time interval between the two emission groups successively emitting laser beams. That is, there is an emission time interval of the second preset duration threshold between the first emission block in the first emission group and the first emission block in the second emission group, and there is an emission time interval of the second preset duration threshold between the first emission block in the second emission group and the first emission block in the third emission group.

The second preset duration threshold can be set according to an actual need. In an example, a value of a time difference between second preset duration thresholds $t3$ and $t4$ satisfies a condition that $t3-t4 >= Lset *2/c$, where $t4$ is time code corresponding to the first emission unit in the adjacent emission groups, $Lset$ is the farthest detection distance of the LiDAR, and $c$ represents a speed of the laser beam. In an example, the second preset duration threshold is greater than the first preset duration threshold, and a difference between the second preset duration threshold and the first preset duration threshold is greater than a preset value.

In an embodiment, the at least two emission groups include a first emission group and a second emission group, the first emission group includes a first emission block and a second emission block, and the second emission group includes a third emission block and a fourth emission block. In this case, specific implementation of controlling at least two emission groups to emit laser beams at different times according to the preset rule may include: controlling the first emission unit to emit the laser beam at corresponding time according to the time coding sequence corresponding to the first emission block, and after a first preset duration threshold, according to a time coding sequence corresponding to the second emission unit, controlling the second emission block to emit a laser beam at corresponding time. The first emission block is controlled to emit the laser beam, and then, after a second preset duration threshold, according to a time coding sequence corresponding to the third emission block, the third emission block is controlled to emit a laser beam at corresponding time, and after a first preset duration threshold, according to a time coding sequence corresponding to the fourth emission unit, the fourth emission unit is controlled to emit a laser beam at corresponding time.

Exemplarily, referring to FIG. 9, in the first measurement cycle, a total of four emission blocks A0, A6, A1, and A7 emit the laser beams, and the emission block A0 and the emission block A6 are controlled first to emit the laser beams. After the second preset duration threshold, the emission block A1 and the emission block A7 are then controlled to emit the laser beams. It is assumed that the time coding sequence corresponding to the emission block A0 is {0.2, 0.3, 0.4, 0.6 ...}, the time coding sequence corresponding to the emission block A6 is {0.3, 0.4, 0.6, 0.7 ...}, the time coding sequence corresponding to the emission block A1 is {0.2, 0.3, 0.5, 0.7 ...}, and the time coding sequence corresponding to emission block A7 is {0.32, 0.41, 0.53, 0.7 ...}, the first preset duration threshold is 3 seconds, and the second preset duration is 5 seconds. If a start moment of the current measurement cycle is 2 seconds, the emission block A0 is controlled to emit a laser beam at the $2.2^{nd}$ second, the emission block A6 is controlled to emit a laser beam at the $5.3^{rd}$ second, the emission block A1 is controlled to emit a laser beam at the $7.2^{nd}$ second, and the emission block A7 is controlled to emit a laser beam at the $10.32^{th}$ second.

It should be noted that the foregoing description is based on an example in which emission time of all first emission blocks in the emission groups in the same measurement cycle is spaced by an emission time interval of the second preset duration threshold. In another embodiment, the emission time interval between the first emission blocks in all the emission groups in the same measurement cycle may also be determined in the time coding manner. For time coding rules, refer to the following description.

In another example in this application, when the two emission groups satisfy a condition of no optical crosstalk in physical positions, the electronic device can also control the two emission groups to emit laser beams in parallel. During implementation, all the at least two emission groups are controlled to emit laser beams in parallel. Emission units in the same emission sequence in the at least two emission groups emit the laser beams according to the time coding sequences corresponding to the emission units. Cross-correlation coefficients of the time coding sequences corresponding to emission units in the same emission sequence in adjacent emission groups are less than the second specified threshold.

The second specified threshold can be set according to the actual need. This is not limited in this embodiment of this application.

As shown in FIG. 9, when any emission groups in the same row emit laser beams, the corresponding receiving units in the corresponding entire row receive echo laser beams of the laser beams emitted by the corresponding any emission groups. For example, when the first emission groups A0 and A6 emit laser beams, receiving units in corresponding row A receive the corresponding echo laser beams. When the second emission groups A1 and A7 emit laser beams, receiving units in corresponding row A receive the corresponding echo laser beams. It can be understood that the number of rows of receivers corresponding to any emission group can be one or two, and the number of rows of the receivers corresponding to any emission group specifically depends on the detection distance requirement and a position relationship between the emission group and the receiving group.

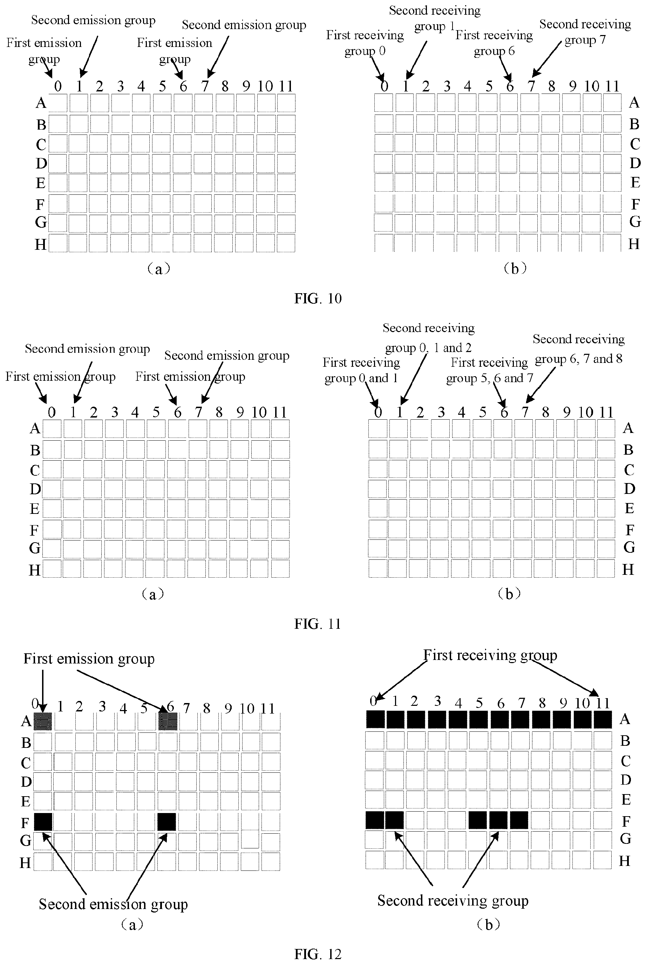

Optionally, in another optional embodiment, when any emission block in the corresponding emission group emits a laser beam, it can be received by a receiving block corresponding to the emission block in the emission group. It can be understood that the emission block in any emission group and the corresponding receiving block may be in a one-to-one correspondence. For example, as shown in FIG. 10, the laser beams emitted by the first emission groups A0 and A6 can be received by the first receiving groups A0 and A6. The laser beams emitted by the second emission groups A1 and A7 can be received by the second receiving groups A1 and A7. It can be understood that the correspondence between the emission block in any emission group and the corresponding receiving block may also be that one emission block corresponds to multiple receiving blocks. For example, as shown in FIG. 11, when the first emission group A0 emits the laser beam, the corresponding receiving blocks A0 and A1 receive the corresponding echo laser beam, and when the first emission group A6 emits the laser beam, the corresponding receiving blocks A5, A6, and A7 receive the corresponding echo laser beam. When the second emission group A1 emits the laser beam, receiving blocks A0, A1, and A2 in the corresponding second receiving group receive the corresponding echo laser beam. When the emission block A7 in the second emission group emits the laser beam, receiving blocks A6, A7, and A8 in the corresponding second receiving group receive the corresponding echo laser beam.

The correspondence between the emission block and the receiving block depends on detection distance requirements in different regions of the LiDAR, a distance between the corresponding emission block and receiving block, focal length of the LiDAR, and a position of the emission block in the emission array. It can be understood that the shorter the detection distance of the LiDAR, the greater the shift of the light spot, and the more the receiving blocks corresponding to one emission block. In an optional embodiment, the correspondence between the emission blocks and the receiving blocks in different regions in the LiDAR can be set according to the requirements. For example, as shown in FIG. 12, the first emission group in the first row corresponds to a relatively short detection distance and large shift of the large light spot, and therefore, the first receiving group corresponding to the first emission group is the entire row. The second receiving group corresponding to the second emission group in the middle row F is some receiving blocks in the row F. This application does not exclusively limit a correspondence between the emission block and the receiving block. It can be understood that when the planar emission array includes multiple emission groups, correspondences between different emission groups and receiving groups may be completely or partially the same. This is not exclusively limited in this application.

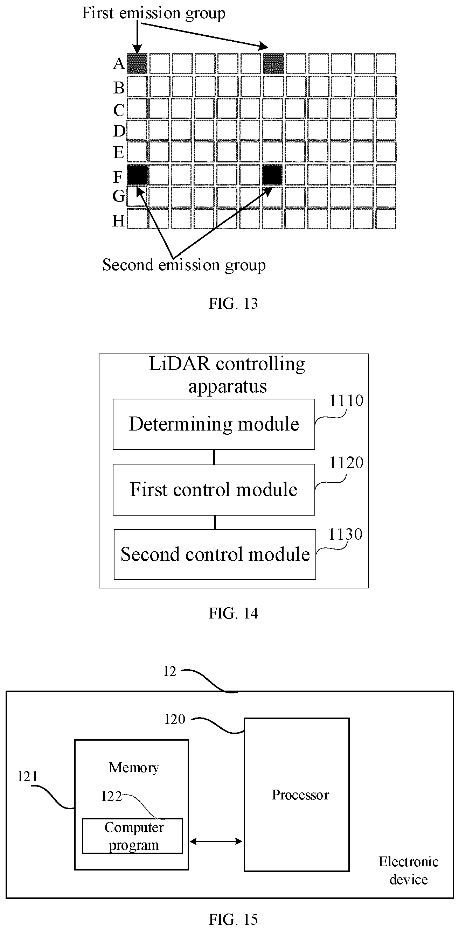

For example, referring to FIG. 13, in the first measurement cycle, a total of four emission blocks of A0, A6, F0, and F6 emit laser beams, where A0 and A6 belong to the first emission group, and F0 and F6 belong to the second emission group. The electronic device controls the first emission group and the second emission group to emit laser beams in parallel. It is assumed that the time coding sequence corresponding to the emission block A0 is {0.2, 0.3, 0.4, 0.6 ...}, the time coding sequence corresponding to the emission unit A6 is {0.3, 0.4, 0.6, 0.7 ...}, the time coding sequence corresponding to the emission block F0 is {0.4, 0.3, 0.1, 0.5 ...}, and the time coding sequence corresponding to emission block F6 is {0.32, 0.4, 0.5, 0.7 ...}, and the first preset duration threshold is 3 seconds. If a start moment of the current measurement cycle is 2 seconds, the emission block A0 is controlled to emit a laser beam at the $2.2^{nd}$ second, the emission block A6 is controlled to emit a laser beam at the $5.3^{rd}$ second, the emission block F0 is controlled to emit a laser beam at the $2.4^{th}$ second, and the emission block F6 is controlled to emit a laser beam at the $5.32^{nd}$ second.

Exemplarily but non-restrictively, within one measurement cycle, emission sequences of multiple emission groups can also be interchanged. Exemplarily, in the foregoing example, each emission block in the second emission group can be first controlled to emit a laser beam, and then each emission block in the first emission group is controlled to emit a laser beam.

The time coding sequence corresponding to the foregoing emission units may be predetermined. For example, there are two emission groups in each measurement cycle. For two emission blocks in the same emission sequence in the first emission group and the second emission group (for example, for A0 emitting first in the first emission group and A1 emitting first in the second emission group in serial control, or for A0 emitting first in the first emission group and F0 emitting first in the second emission group in parallel control), a manner for determining a time coding sequence corresponding to each of the two emission blocks includes: based on the second preset sequence, generating, by a linear feedback shift register, a series of pseudorandom sequences to obtain m pseudorandom sequences, where m is an integer greater than 1. An autocorrelation function for each of the m pseudorandom sequences is determined. According to an autocorrelation function of each of the m pseudorandom sequences, s pseudorandom sequences with autocorrelation coefficients less than a third specified threshold are determined from the m pseudorandom sequences, where s is an integer greater than 1 and less than or equal to m. According to the s pseudorandom sequences, the time coding sequence corresponding to each of the two emission units is determined.

The third specified threshold can be set according to an actual need. In an example, the third specified threshold can be the same as the first specified threshold. In another example, the third specified threshold can also be different from the first specified threshold.

The second preset sequence can be set according to an actual need. The second preset sequence can also be understood as a sequence seed used to generate a series of pseudorandom sequences.

During implementation, the second preset sequence is input into the linear feedback shift register, and the linear feedback shift register generates the series of pseudorandom sequences. Likewise, for any one of the series of generated pseudorandom sequences, if correlation between the pseudorandom sequence and itself is large, when the pseudorandom sequence is subsequently selected as the time coding sequence of the emission unit, a laser beam emitted by the emission unit is likely to interfere with a laser beam emitted by the emission block at the next moment. Therefore, herein, the autocorrelation function of each of the m generated pseudorandom sequences can be determined. For example, the autocorrelation function can be determined through formula (1). Then a pseudorandom sequence with an autocorrelation function whose other parts than a main lobe are as small as possible is selected. For example, a pseudorandom sequence with an autocorrelation coefficient less than the third specified threshold is selected.

Then, based on the determined s pseudorandom sequences, the time coding sequence corresponding to each of the two emission blocks is determined. In an example in this application, specific implementation may include: determining a cross-correlation function of each of the s pseudorandom sequences and other pseudorandom sequences in the s pseudorandom sequences. According to the determined cross-correlation function, two pseudorandom sequences with a cross-correlation coefficient less than a second specified threshold are determined from the s pseudorandom sequences. The two determined pseudorandom sequences are separately determined as time coding sequences corresponding to emission blocks in the two emission units.

Because there are multiple emission groups in one measurement cycle, if multiple emission groups emit laser beams in parallel, that is, the same pseudorandom sequence is used as the time coding sequence of the multiple emission groups, optical crosstalk is prone to occur between the multiple emission groups. Therefore, in an example, the electronic device determines a cross-correlation function of each of the determined s pseudorandom sequences and other pseudorandom sequences in the s pseudorandom sequences, so that the pseudorandom sequence that does not cause optical crosstalk is determined from the s pseudorandom sequences according to the determined cross-correlation function. During implementation, a cross-correlation function of two pseudorandom sequences can be determined through the following formula (2):

$$CCF(a, b, \tau) = \sum{}_{i=1}^{p} a_i b_{i+\tau} \quad (2)$$

Herein, $CCF(a, b, \tau)$ is the cross-correlation function, $a_i$ is a pseudorandom sequence, and $b_{i+\tau}$ is another pseudorandom sequence.

Then a pair of pseudorandom sequences whose cross-correlation coefficient is less than the preset second specified threshold are selected. For example, a pair of pseudorandom sequences with the minimum cross-correlation coefficient can be selected. The pair of selected pseudorandom sequences are respectively determined as the time coding sequences corresponding to both of the foregoing two emission units. In this manner, the time coding sequence corresponding to each emission unit in the laser emission array can be determined.

In another embodiment, if one measurement cycle includes three or more emission groups, when the time coding sequence corresponding to each emission block in each emission group is determined, the time coding sequences corresponding to emission units in the first emission group and the second emission group may be first determined in the foregoing manner. Then based on the time coding sequence corresponding to each emission unit in the second emission group, the time coding sequence corresponding to each emission unit in the third emission group adjacent to the second emission group is further determined in the foregoing method. For example, a pseudorandom sequence sharing the minimum cross-correlation coefficient with a time coding sequence corresponding to the first emission unit in the second emission group can be selected from the remaining s-2 pseudorandom sequences, and the selected pseudorandom sequence is used as the time coding sequence corresponding to the first emission unit in the third emission group. By analogy, the time coding sequence corresponding to each emission unit included in each of the multiple emission groups can be determined in this manner.

Step 803: Separately control a receiving unit group in the laser receiving array that corresponds to each of the at least two emission groups to receive a laser echo.

In an example, when the electronic device controls the multiple emission groups to emit laser beams serially, for example, when the four emission blocks of A0, A6, A1, and A7 are controlled to emit the laser beams in one measurement cycle, the laser echo can be received by the first laser receiving row in this measurement cycle.

In an example, when the electronic device controls the multiple emission groups to emit laser beams in parallel, for example, when the four emission blocks of A0, A6, F0, and F6 are controlled to emit the laser beams in one measurement cycle, the first laser receiving row can be controlled to receive laser echoes of A0 and A6 in this measurement cycle, and the sixth laser receiving row is controlled to receive laser echoes of F0 and F6.

In an optional manner, before controlling at least one emission block to emit a laser beam according to the preset rule, the method further includes: obtaining the number of times for turning on the at least one emission block in the measurement cycle, where controlling at least one emission block to emit a laser beam according to the preset rule includes: controlling the at least one emission block to emit the laser beam according to the obtained number of times.

In an optional manner, before controlling at least two emission groups to emit laser beams according to a preset rule, the method further includes: obtaining emission power of each emission block in the at least two emission groups in the current measurement cycle, and controlling at least two emission groups to emit laser beams according to the emission power of each emission block.

It can be understood that the preset rule can also be a combination of the foregoing optional methods, and this is not limited in this application.

In this embodiment of this application, different emission blocks in multiple emission groups can be controlled to emit laser beams at different times, which can also avoid optical crosstalk caused if multiple emission blocks emit laser beams simultaneously while further improving a scanning frame rate, thereby improving accuracy of the measurement result.

It should be understood that a sequence number of each step in the foregoing embodiments does not mean an execution sequence. An execution sequence of each process should be determined based on a function and internal logic of each process, and should not constitute any limitation to an implementation process of the embodiments of this application.

FIG. 14 is a schematic structural diagram of a LiDAR controlling apparatus according to an exemplary embodiment. The apparatus can be implemented through software, hardware or a combination thereof. The LiDAR controlling apparatus may include:

a determining module 1110, configured to: in a measurement cycle, determine at least one emission block to be turned on in the measurement cycle from the laser emission array, where the laser emission array includes multiple emission blocks and each emission block includes multiple emission units;
a first control module 1120, configured to control the at least one emission block to emit a laser beam according to a preset rule; and
a second control module 1130, configured to control a receiving block in the laser receiving array that corresponds to the at least one emission block to receive a laser echo, where the laser echo refers to an echo formed after the laser beam is reflected by a target object.

In an example in this application, the first control module 1120 is configured to:
control multiple emission units in the at least one emission block to emit laser beams simultaneously.

In an example in this application, the apparatus further includes an obtaining module 1140, where the obtaining module 1140 is configured to obtain the number of times for turning on the at least one emission block in the measurement cycle; and the first control module 1120 is further configured to control the at least one emission block to emit the laser beam according to the obtained number of times.

In an example in this application, the obtaining module 1140 is further configured to obtain a time coding sequence corresponding to the at least one emission block; and the first control module 1120 is further configured to emit the laser beam according to the time coding sequence corresponding to the at least one emission block and the obtained number of times.

In an example in this application, when there are at least two emission blocks to be turned on in the measurement cycle, the at least two emission blocks satisfy a condition of no optical crosstalk in physical positions;

the first control module 1120 is further configured to control at least two emission blocks to emit laser beams at different times according to the preset rule; and
the first control module 1120 is specifically configured to: according to a time coding sequence corresponding to an emission block in a $k^{th}$ emission in the at least two emission blocks, control the emission block in the $k^{th}$ emission to emit a laser beam at corresponding time, where k is an integer greater than or equal to 1; and
after a first preset duration threshold, according to a time coding sequence corresponding to an emission block in a $(k+1)^{th}$ emission, control the emission block in the $(k+1)^{th}$ emission to emit a laser beam at corresponding time.

A manner for determining a time coding sequence corresponding to any one of the at least two emission blocks includes: based on the first preset sequence, generating, by a linear feedback shift register, a series of pseudorandom sequences to obtain multiple pseudorandom sequences; determining an autocorrelation function for each of the multiple pseudorandom sequences; according to the autocorrelation function, determining at least one pseudorandom sequence with an autocorrelation coefficient less than a first specified threshold from the multiple pseudorandom sequences; and selecting one pseudorandom sequence from the determined at least one pseudorandom sequence as a time coding sequence corresponding to any emission block.

In an example in this application, the emission block corresponds to N receiving blocks in the laser receiving array, and N is a positive integer greater than or equal to 1; and
the second control module 1120 is configured to: obtain N receiving blocks corresponding to each emission block; and control the N receiving blocks to receive the laser echo, where after controlling a receiving block in the laser receiving array that corresponds to the emission block to receive an echo laser beam, the method further includes: fusing echo data received by the N receiving blocks to obtain a fusion result; and determining a distance between the LiDAR and a target object based on the fusion result.

In this embodiment of this application, in a measurement cycle, an emission group to be turned on in the measurement cycle is determined from the laser emission array, the emission group includes at least two emission units, and the at least two emission units satisfy a condition of no optical crosstalk in physical positions. At least two emission units are controlled to emit laser beams at different times based on a preset rule. A receiving unit group in the laser receiving array that corresponds to the emission group is controlled to receive a laser echo, where the laser echo refers to an echo formed after the laser beam is reflected by a target object. Therefore, in one measurement cycle, by controlling the at least two emission units to emit laser beams at different times, not only a scanning frame rate is ensured, but also optical crosstalk can be avoided, that is, the method provided in this application can resolve problems of optical crosstalk and frame rate of the array-type LiDAR, so that the measurement result can be accurately determined.

FIG. 15 is a schematic structural diagram of an electronic device according to an embodiment of this application. As shown in FIG. 15, the electronic device 12 in this embodiment includes: at least one processor 120 (only one processor is shown in FIG. 15), a memory 121, and a computer program 122 stored in the memory 121 and executable on the at least one processor 120, where when the processor 120 executes the computer program 122, the steps in the foregoing method embodiments are implemented.

The electronic device 12 may be a computing device such as a desktop computer, a notebook, a palmtop computer, and a cloud server. The electronic device may include, but is not limited to, the processor 120 and the memory 121. A person skilled in the art can understand that FIG. 12 is only an example of the electronic device 12, and does not constitute a limitation to the electronic device 12. The terminal device may include more or fewer components than those shown in the figure, or a combination of some components, or different components. For example, the electronic device may also include input and output devices, a network access device, and the like.

The processor 120 may be a CPU (central processing unit), or the processor 120 may also be another general-purpose processor, a DSP (digital signal processor), an ASIC (application specific integrated circuit), an FPGA (field-programmable gate array) or another programmable logic device, a discrete gate or transistor logic device, a discrete hardware component, or the like. The general-purpose processor can be a microprocessor, or the processor can be any conventional processor or the like.

The memory 121 in some embodiments may be an internal storage unit of the electronic device 12, such as a hard disk or a memory of the electronic device 12. The memory 121 in some other embodiments may alternatively be an external storage device of the electronic device 12, for example, a plug-connected hard disk, an SMC (smart media card), an SD (secure digital) card, or a flash card (Flash Card) equipped on the electronic device 12. Further, the memory 121 may alternatively include both the internal storage unit and the external storage device of the electronic device 12. The memory 121 is configured to store an operating system, an application program, a boot loader (BootLoader), data, another program, and the like, for example, program code of a computer program. The memory 121 can also be configured to temporarily store output data or to-be-output data.

It should be noted that content such as information exchange and an execution process between the foregoing apparatuses or units is based on the same concept as the method embodiments of this application. For specific functions and technical effects thereof, reference may be made to the method embodiments. Details are not described herein again.

A person skilled in the art can clearly understand that, for the purpose of convenient and brief description, division of the foregoing functional units and modules is taken as an example for illustration. In actual application, the foregoing functions can be allocated to different units and modules and implemented according to a requirement, that is, an inner structure of an apparatus is divided into different functional units and modules to implement all or part of the functions described above. The functional units and modules in the embodiments may be integrated into one processing unit, or each unit may exist alone physically, or two or more units may be integrated into one unit. The integrated unit may be implemented in a form of hardware, or may be implemented in a form of a software functional unit. In addition, specific names of the functional units and modules are only for the convenience of distinguishing one another, and are not intended to limit the protection scope of this application. For a detailed working process of units and modules in the foregoing system, reference may be made to a corresponding process in the foregoing method embodiments. Details are not described again herein.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A LiDAR controlling method, wherein the LiDAR comprises a laser emission array and a laser receiving array, the method comprising:

    in a measurement cycle, determining at least one emission block to be turned on in the measurement cycle from the laser emission array, wherein the laser emission array comprises multiple emission blocks and each emission block comprises multiple emission units;
    controlling at least one emission block to emit a laser beam according to a preset rule; and
    controlling a receiving block in the laser receiving array that corresponds to the at least one emission block to receive a laser echo, wherein the laser echo refers to an echo formed after the laser beam is reflected by a target object.

2. The method according to claim 1, wherein controlling at least one emission block to emit a laser beam according to the preset rule comprises:
    controlling multiple emission units in the at least one emission block to emit laser beams simultaneously.

**3.** The method according to claim 1, wherein before controlling at least one emission block to emit a laser beam according to the preset rule, the method further comprises:

obtaining the number of times for turning on the at least one emission block in the measurement cycle, and wherein controlling at least one emission block to emit a laser beam according to the preset rule comprises: controlling the at least one emission block to emit the laser beam according to the obtained number of times.

**4.** The method according to claim 3, wherein the method further comprises:
obtaining a time coding sequence corresponding to the at least one emission block, and emitting the laser beam according to the time coding sequence corresponding to the at least one emission block and the obtained number of times.

**5.** The method according to claim 1, wherein at least two emission blocks are determined to be turned on in the measurement cycle, the at least two emission blocks satisfying a condition of no optical crosstalk in physical positions, and
the method further comprises:
controlling the at least two emission blocks to emit laser beams at different times according to the preset rule.

**6.** The method according to claim 5, wherein controlling at least two emission blocks to emit laser beams at different times according to the preset rule comprises:

according to a time coding sequence corresponding to an emission block in a kth emission in the at least two emission blocks, controlling the emission block in the kth emission to emit a laser beam at corresponding time, wherein k is an integer greater than or equal to 1; and
after a first preset duration threshold, according to a time coding sequence corresponding to an emission block in a $(k+1)^{th}$ emission, controlling the emission block in the $(k+1)^{th}$ emission to emit a laser beam at corresponding time.

**7.** The method according to claim 5, wherein a time coding sequence corresponding to any one of the at least two emission blocks is determined in a manner comprising:

based on a first preset sequence, generating, by a linear feedback shift register, a series of pseudorandom sequences to obtain multiple pseudorandom sequences;
determining an autocorrelation function for each of the multiple pseudorandom sequences;
according to the autocorrelation function, determining at least one pseudorandom sequence with an autocorrelation coefficient less than a first specified threshold from the multiple pseudorandom sequences; and
selecting one pseudorandom sequence from the determined at least one pseudorandom sequence as a time coding sequence corresponding to any emission block.

**8.** The method according to claim 1, wherein the emission block corresponds to N receiving blocks in the laser receiving array, N being a positive integer greater than or equal to 1,
wherein controlling a receiving block in the laser receiving array that corresponds to the at least one emission block to receive a laser echo comprises:

obtaining N receiving blocks corresponding to each emission block; and
controlling the N receiving blocks to receive the laser echo, and
wherein after controlling a receiving block in the laser receiving array that corresponds to the emission block to receive a laser echo, the method further comprises:

fusing echo data received by the N receiving blocks to obtain a fusion result; and
determining a distance between the LiDAR and the target object based on the fusion result.

**9.** A LiDAR controlling apparatus, wherein the LiDAR comprises a laser emission array and a laser receiving array, the apparatus comprising:

a determining module, configured to: in a measurement cycle, determine at least one emission block to be turned on in the measurement cycle from the laser emission array, wherein the laser emission array comprises multiple emission blocks and each emission block comprises multiple emission units;

a first control module, configured to control the at least one emission block to emit a laser beam; and
a second control module, configured to control a receiving block in the laser receiving array that corresponds to the at least one emission block to receive a laser echo, wherein the laser echo refers to an echo formed after the laser beam is reflected by a target object, and the receiving block comprises multiple receiving units.

10. An electronic device, comprising a memory, a processor and a computer program stored in the memory and executable on the processor which, when executed by the processor, causes the processor to implement the method according to any one of claims 1 to 8.

Emission array

Entire field of view of one emission block

| | 0 | 1 | 2 | 3 | 4 | 5 | 6 | 7 | 8 | 9 | 10 | 11 |
|---|---|---|---|---|---|---|---|---|---|---|---|---|
| A | | | | | | | | | | | | |
| B | | | | | | | | | | | | |
| C | | | | | | | | | | | | |
| D | | | | | | | | | | | | |
| E | | | | | | | | | | | | |
| F | | | | | | | | | | | | |
| G | | | | | | | | | | | | |
| H | | | | | | | | | | | | |

(a)

Receiving array

Entire field of view of one receiving block

| 0 | 1 | 2 | 3 | 4 | 5 | 6 | 7 | 8 | 9 | 10 | 11 | |
|---|---|---|---|---|---|---|---|---|---|---|---|---|
| | | | | | | | | | | | | A |
| | | | | | | | | | | | | B |
| | | | | | | | | | | | | C |
| | | | | | | | | | | | | D |
| | | | | | | | | | | | | E |
| | | | | | | | | | | | | F |
| | | | | | | | | | | | | G |
| | | | | | | | | | | | | H |

(b)

FIG. 1

In a measurement cycle, determine at least one emission block to be turned on in a current measurement cycle from the laser emission array, where the emission array includes multiple emission blocks, and each emission block includes multiple emission units ⟋ 201

Control at least one emission block to emit a laser beam according to a preset rule ⟋ 202

Control a receiving block in the laser receiving array that corresponds to the emission block to receive a laser echo, where the laser echo refers to an echo formed after the laser beam is reflected by a target object ⟋ 203

FIG. 2

(a)

(b)

(c)

FIG. 3

Entire field of view of one
emission block

Entire field of view of one
receiving block

Optical adjustment unit

FIG. 4

In a measurement cycle, determine an emission block to be turned on in a current measurement cycle from the laser emission array, where when there are at least two emission blocks to be turned on in the current cycle, the at least two emission blocks satisfy a condition of no optical crosstalk in physical positions ⌐ 501

Control at least two emission blocks to emit laser beams at different times according to the preset rule ⌐ 502

A receiving block group in the laser receiving array that corresponds to the emission group is controlled to receive a laser echo, where the laser echo refers to an echo formed after the laser beam is reflected by a target object ⌐ 503

FIG. 5

First emission group    First emission group                    Receiving group

0 1 2 3 4 5 6 7 8 9 10 11                    0 1 2 3 4 5 6 7 8 9 10 11

Laser beam    Laser beam                    d2    d1

(a)                                              (b)

FIG. 6

Time cycle  Time cycle  Time cycle  Time cycle

t1    t2    t1    t2    t1    t2    t1    t2        Time

First emission  Second emission

FIG. 7

In a measurement cycle, determine at least two emission groups to be turned on in a current measurement cycle from the laser emission array, where each emission group includes at least two emission blocks, and the at least two emission blocks satisfy a condition of no optical crosstalk in physical positions — 801

Control at least two emission groups to emit laser beams at different times according to the preset rule — 802

Separately control a receiving unit group in the laser receiving array that corresponds to each of the at least two emission groups to receive a laser echo — 803

FIG. 8

(a)

(b)

FIG. 9

FIG. 10

FIG. 11

FIG. 12

First emission group

Second emission group

FIG. 13

LiDAR controlling apparatus

Determining module — 1110

First control module — 1120

Second control module — 1130

FIG. 14

12

120

121

Memory

122

Computer program

Processor

Electronic device

FIG. 15

Europäisches
Patentamt

European
Patent Office

Office européen
des brevets

# EUROPEAN SEARCH REPORT

**Application Number**

**EP 23 20 7741**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/405155 A1 (SHAND MARK ALEXANDER [US]) 30 December 2021 (2021-12-30) * paragraphs [0080] - [0110], [0114] - [0179]; figures 3,5-10 * ----- | 1-10 | INV. G01S7/481 G01S7/4863 G01S17/89 |
| X | US 2019/011567 A1 (PACALA ANGUS [US] ET AL) 10 January 2019 (2019-01-10) * paragraphs [0007] - [0025], [0061] - [0211] * ----- | 1-10 | |

**TECHNICAL FIELDS SEARCHED (IPC)**

G01S

The present search report has been drawn up for all claims

| Place of search | Date of completion of the search | Examiner |
|---|---|---|
| Munich | 26 February 2024 | Köppl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7741

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2024

| Patent document cited in search report | | Publication date | Patent family member(s) | | Publication date |
|---|---|---|---|---|---|
| US 2021405155 | A1 | 30-12-2021 | CA | 3177610 A1 | 06-01-2022 |
| | | | CN | 115735130 A | 03-03-2023 |
| | | | EP | 4118452 A1 | 18-01-2023 |
| | | | JP | 7369873 B2 | 26-10-2023 |
| | | | JP | 2023520998 A | 23-05-2023 |
| | | | US | 2021405155 A1 | 30-12-2021 |
| | | | US | 2023120380 A1 | 20-04-2023 |
| | | | WO | 2022005689 A1 | 06-01-2022 |
| US 2019011567 | A1 | 10-01-2019 | AU | 2018297291 A1 | 27-02-2020 |
| | | | CA | 3068943 A1 | 10-01-2019 |
| | | | CN | 110998365 A | 10-04-2020 |
| | | | CN | 111751836 A | 09-10-2020 |
| | | | CN | 113466882 A | 01-10-2021 |
| | | | EP | 3649483 A1 | 13-05-2020 |
| | | | IL | 271765 A | 27-02-2020 |
| | | | JP | 2020526754 A | 31-08-2020 |
| | | | KR | 20200024914 A | 09-03-2020 |
| | | | SG | 11201913642V A | 30-01-2020 |
| | | | TW | 201920986 A | 01-06-2019 |
| | | | TW | 202131016 A | 16-08-2021 |
| | | | US | 2019011556 A1 | 10-01-2019 |
| | | | US | 2019011561 A1 | 10-01-2019 |
| | | | US | 2019011562 A1 | 10-01-2019 |
| | | | US | 2019011567 A1 | 10-01-2019 |
| | | | US | 2019064355 A1 | 28-02-2019 |
| | | | US | 2020041646 A1 | 06-02-2020 |
| | | | US | 2021318434 A1 | 14-10-2021 |
| | | | US | 2024012142 A1 | 11-01-2024 |
| | | | WO | 2019010320 A1 | 10-01-2019 |

EPO FORM P0459

For more details about this annex : see Official Journal of the European Patent Office, No. 12/82